# EUROPEAN PATENT APPLICATION

(11) **EP 4 696 432 A1**
(43) Date of publication of application: **18.02.2026**
(21) Application number: 25183490.9
(22) Date of filing: 17.06.2025
(51) Int. Cl.: B22F 1/102, B22F 1/142, B22F 1/16, B22F 1/14, B33Y 70/10

(54) **METHODS OF FORMING A DENSE COATING ON PARTICLES**

(30) Priority: 15.08.2024 US 202418806169
(71) Applicant: General Electric Company, Cincinnati, Ohio 45215 (US)
(72) Inventor: BURESH, Steve John, Niskayuna 12309 (US); HUANG, Shenyan, Niskayuna 12309 (US); CASEY, Rebecca, Niskayuna 12309 (US)
(74) Representative: Openshaw & Co.

(57) **Abstract**

Methods of forming a coating are presented. For example, a method (200) for forming a coating on particles may include mixing (204) an initial powder (100) with a pressing medium (110), the initial powder comprising a plurality of core particles (102) having an initial shell coating (104) thereon; isostatic pressing (206) the initial powder within the pressing medium to densify the initial shell coating on the plurality of core particles to form a pressed powder (120), the pressed powder comprising a densified shell coating (122) on the plurality of core particles; and thereafter, removing (208) the pressing medium from the pressed powder.

## Description

### FEDERALLY SPONSORED RESEARCH

This invention was made with government support under contract number AR0001547 awarded by the ARPA-E. The U.S. government may have certain rights in the invention.

### FIELD

The present disclosure relates to methods of forming a denser and/or better bonded coating on a plurality of particles, which includes isostatic pressing, as well as methods of forming articles from such densely coated particles.

### BACKGROUND

Various coatings may be applied to articles to improve performance characteristics of the articles. For example, some coatings may improve high temperature performance of an article, or other coatings may prevent degradation of an article exposed to harsh chemicals or the like. Coatings may also be formed on individual powder particles to improve characteristics of the individual particles, alloy, and/or final article. For instance, a powder formed from a plurality of core particles may be coated with a powder that has smaller particles using a process such as, e.g., powder agitation/vibration, acoustic mixing, or ultrasonic mixing. However, such smaller particles often are only loosely bonded to the core particles, such that the coating has a relatively low density and/or weak bond, and the core particles are less likely to stay coated during handling and/or processing.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1A is a schematic view of an initial powder, which includes a plurality of core particles loosely coated with an initial shell coating of a plurality of initial shell particles, in accordance with an exemplary aspect of the present disclosure.
FIG. 1B is a schematic view of the initial powder of FIG. 1A within a pressing medium in accordance with an exemplary aspect of the present disclosure.
FIG. 1C is a schematic view of a pressed powder having a densified shell coating in accordance with an exemplary aspect of the present disclosure.
FIG. 2 is a flow chart depicting a method of forming a coating on particles in accordance with an exemplary aspect of the present disclosure.
FIG. 3 is a flow chart depicting a method of forming an article from a pressed powder in accordance with an exemplary aspect of the present disclosure.
FIG. 4A is a schematic view of forming a green pressed powder article in accordance with an exemplary aspect of the present disclosure.
FIG. 4B is a schematic view of densifying the green pressed powder article of FIG. 4A in accordance with an exemplary aspect of the present disclosure.
FIG. 4C is a schematic view of an article formed from a pressed powder in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of" since the relative position above or below depends upon the orientation of the device to the viewer.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

The term "organic" is used herein to refer to a class of chemical compounds that include carbon atoms. For example, an "organic polymer" is a polymer that includes carbon atoms in the polymer backbone, but may also include other atoms either in the polymer backbone and/or in side chains extending from the polymer backbone (e.g., oxygen, nitrogen, sulfur, etc.).

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition. The term "substantially free" also encompasses completely free.

The term "particle" as used herein refers to spherical particles as well as non-spherical particles. For spherical particles, a size of a particle refers to the particle's diameter, or to an average diameter for multiple particles or a plurality of particles. For non-spherical particles, a size of a particle refers to an equivalent diameter of the particle, or to an average equivalent diameter for multiple particles or a plurality of particles. Therefore, it will be appreciated that "size" or "diameter" as used herein indicate a diameter of a spherical particle or an equivalent diameter for a non-spherical particle.

As previously stated, particle coatings may be formed on articles or individual particles to improve characteristics of the individual particles, an alloy comprising the individual particles, and/or a final article formed from the individual particles. For example, a powder formed from a plurality of core particles may be mixed with a powder of smaller or finer particles to form a shell on the core particles. The shell particles loosely attach to the surface of the core particles, which have surface roughness and cavities so isostatic pressure via conventional methods, e.g., utilizing bags or molds, are unable to uniformly press on individual particles to assist in bonding to the shell particles. As such, the coating of shell particles applied using prior techniques or methods has a relatively low density, and the core particles are less likely to stay coated during handling and/or processing. Additionally, relatively high temperature processes for applying coatings, such as physical vapor deposition (PVD) powder coating with agitation at elevated temperature, can induce stress due to a mismatch in coefficients of thermal expansion between core and coating particles.

The present disclosure is generally related to coating particles with a dense coating. More particularly, the present disclosure is generally related to an improved coating bond on an item such as a particle, e.g., such that individual particles of a powder have a dense coating thereon.

Methods according to the present disclosure include starting with an initial quantity of core powder particles having an initial shell coating, mixing the initial "coated" powder with a pressing medium, isostatic pressing the mixture of the pressing medium and initial "coated" powder to form a pressed powder, and, thereafter, removing the pressing medium from the pressed powder. The pressing medium fills shell particle gaps and covers their outer surfaces, which allows pressure to be effectively applied on the shell particles, while still keeping the particles separate. It will be appreciated that the pressed powder is itself a collection or group of individual particles, at least a portion of which have a densified shell coating thereon that is denser than the initial shell coating of the initial powder. That is, "pressed powder" as used herein refers to a plurality of discrete pressed particles, at least a portion of such discrete pressed particles having a densified shell coating. The present disclosure also includes methods of forming articles from such pressed powder.

Using the methods of forming a coating on particles as described herein, a denser coating or improved coating bond can be formed between a core particle and a shell particle. For instance, a larger core particle can be coated with a plurality of smaller coating particles, e.g., a core particle can be coated with a plurality of coating particles having an average diameter smaller than a diameter of the core particle, and following the process described herein, the shell or coating particle(s) can have a stronger bond to the core particle, without affecting material properties upon removal of the pressing medium as described herein. Further, more uniform coating coverage may be achieved. Moreover, the methods described herein utilize relatively low temperature processing, thereby avoiding induced stress that arises from a coefficient of thermal expansion (CTE) mismatch. Finally, unlike in-situ formed oxide shells, methods and articles of the present disclosure allow more freedom of shell particle composition.

A pressed powder, e.g., a plurality of core particles some or all having a densified shell coating thereon, formed using a process as described herein can then be used to form one or more articles. For example, such a pressed powder can be used to form a soft magnetic composite (SMC) article, where the core particles are a soft magnetic material and the shell particles are an electrical insulator. A uniform coverage of shell particles surrounding the surface of core particles effectively constrains eddy current loss within each core particle, thus reducing the bulk core loss in the consolidated SMC article. An SMC article formed using a pressed powder as described herein can have an improved electrical resistivity of six times (6X) or more compared to prior SMC articles, which have a relatively low electrical resistivity. Further, SMC articles formed from such a pressed powder can have an improved electrical resistivity without impacting magnetic properties of the SMC article. For example, the isostatic pressing does not introduce plastic strain to the soft magnetic core powder particles, thus does not harm its coercivity. As such, SMCs formed from such pressed powder as described herein may be attractive for high power density axial flux and transverse flux electric machines, with significantly reduced eddy current losses at high frequencies. The SMCs described herein also may be useful for lightweighting inductors in power electronics and transformer cores that operate at high frequencies. Moreover, the densified shell coating described herein may have additional benefits, such as oxidation protection for an iron powder underneath the shell during thermal exposure in an oxidizing environment, increasing surface roughness to facilitate powder locking during uniaxial pressing, changing powder flowability to facilitate additive manufacturing, changing surface corrosion, and/or erosion properties of the pressed powder article.

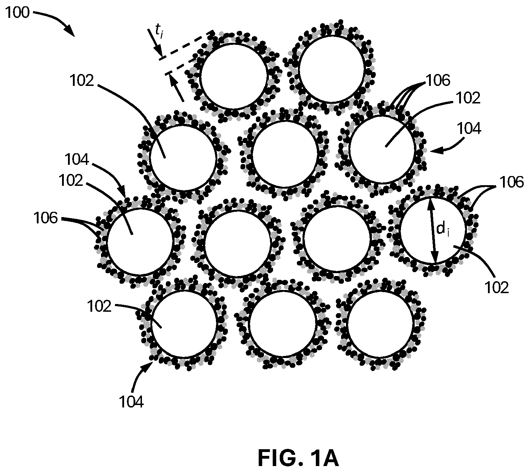

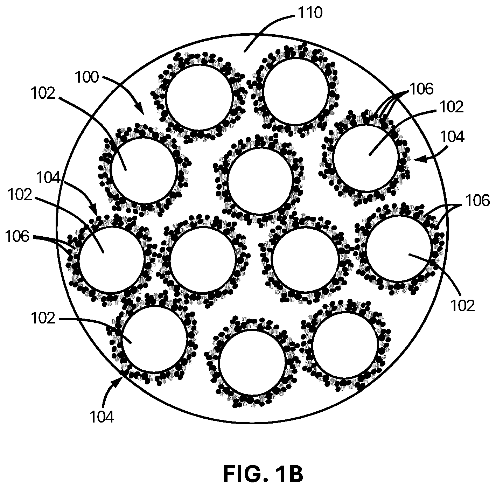

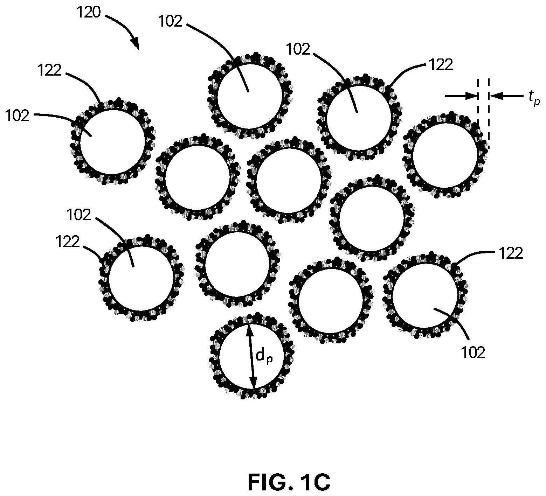

Referring now to the drawings, wherein identical numerals indicate the same elements throughout the figures, FIGS. 1A, 1B, and 1C provide schematic representations of, respectively, an initial powder 100 (FIG. 1A), the initial powder 100 mixed within a pressing medium 110 (FIG. 1B), and a pressed powder 120 with the pressing medium 110 removed (FIG. 1C). The pressed powder 120 may be used to form various articles, as discussed in greater detail herein.

Referring particularly to FIG. 1A, the initial powder 100 includes a plurality of core particles 102 having an initial shell coating 104 thereon. That is, the initial shell coating 104 is formed on the plurality of core particles 102 to form the initial powder 100. In at least some embodiments, the initial shell coating 104 includes a plurality of initial shell particles 106 having an average diameter that is smaller than an average diameter of the plurality of core particles 102. Stated differently, the plurality of core particles 102 have an average diameter that is larger than the average diameter of the plurality of initial shell particles 106, such as at least two times (2X) larger, such as at least three times (3X) larger, at least four times (4X) larger, at least five times (5X) larger, at least six times (6X) larger, at least seven times (7X) larger, or at least ten times (10X) larger than the average diameter of the plurality of shell particles 106. For example, the plurality of core particles 102 can be a powder having an average diameter of about 200 µm or less, and the plurality of initial shell particles 106 can be a powder having an average diameter of about 5 µm or less, such that the plurality of initial shell particles 106 is a smaller powder than the powder of the plurality of core particles 102. The plurality of core particles 102 and the plurality of initial shell particles 106 can have other averages diameters as well, with the average diameter the plurality of initial shell particles 106 being smaller than the average diameter of the plurality of core particles 102.

In some embodiments, the plurality of initial shell particles 106 is mixed with the plurality of core particles 102 to form the initial shell coating 104 on the plurality of core particles 102. As one example, the plurality of core particles 102 is an iron powder that is mixed with the plurality of initial shell particles 106 that is a finer ferrite powder, which, upon mixing, can leave a thin or loosely adhered, non-dense ferrite coating on the iron powder. Mixing techniques may include mechanical mixing, ball milling, acoustic mixing, ultrasonic mixing, and/or manual mixing. In other embodiments, a slurry composition including the plurality of initial shell particles 106 is applied onto the plurality of core particles 102 to form the initial shell coating 104 on the plurality of core particles 102. The slurry composition may include a carrier such as water, a solvent, or a polymer or any suitable carrier.

It will be appreciated that the plurality of core particles 102 and the plurality of initial shell particles 106 may be any suitable material. For instance, the plurality of core particles 102 may comprise a magnetic material, e.g., a magnetic compound containing iron (Fe), such as at least one of Fe-Si, Fe-Al, Fe-Ni, Fe-Co, iron containing borides, or other magnetic compounds, or the plurality of core particles 102 may be cobalt (Co) based. The plurality of initial shell particles 106 may be a metal, an oxide, or a non-oxide ceramic. In some embodiments, the plurality of initial shell particles 106 may be a material that is an electrical insulator, and in various embodiments may comprise at least one soft ferrite, such as Li, Mn-Zn, Mn-Mg, Ni-Zn, Cu-Zn; a nitride, such as iron nitride (Fe₂N), aluminum nitride (AlN), or boron nitride (BN); or an oxide, such as alumina, silica, zirconia, yttria, or magnesia.

Turning to FIG. 1B, the initial powder 100 is mixed with the pressing medium 110. Thus, the pressing medium 110 is not merely a sheet of material such as a bag or mold as used in conventional or previously known processes; instead, the pressing medium 110 of the present disclosure is a material that has a sufficient viscosity to mix with the initial powder 100 and thereby uniformly transmit pressure in the isostatic pressing process to the uneven surface of the particles of the initial powder 100. That is, the pressing medium 110 does not "wash" or "slip" off the coated particles of the initial powder 100 and can fully coat the coated particles of the initial powder 100 for uniform transmission of pressure in the isostatic pressing process. The pressing medium 110 and the initial powder 100 may be manually blended or otherwise gently blended using a folding in motion with minimal manipulation, or the pressing medium 110 may be placed in a vacuum bag with the initial powder 100, sealed, and then left alone or gently manipulated to infiltrate or mix together the pressing medium 110 and initial powder 100. The initial powder 100 may be mixed with the pressing medium 110 in other ways as well.

In some embodiments, the pressing medium 110 is chemically inert with respect to the plurality of core particles 102 and the initial shell coating 104, but in other embodiments, the pressing medium 110 reacts with the initial shell particles 106 and/or the plurality of core particles 102, e.g., to impart a desired element or otherwise assist or improve the initial powder 100 as it converts to the pressed powder. Further, the pressing medium 110 is substantially free from water. In at least some embodiments, the pressing medium 110 includes an organic polymeric material. The pressing medium 110 may be chosen as a material that will not wash away or evaporate until subjected to a certain temperature and/or pressure. For instance, the pressing medium 110 can include petroleum jelly, polyvinyl acetate (PVA), polyvinyl pyrrolidone (PVB), or another suitable material. The pressing medium 110 may be formed from one individual material, e.g., the pressing medium 110 may be only petroleum jelly, or the pressing medium 110 may be formed from a combination of materials. In addition, it will be appreciated that a minimum quantity of the pressing medium 110 is required to cover all of the surfaces of the plurality of core particles 102 having the initial shell coating 104 thereon.

The pressing medium 110 with the initial powder 100 mixed therein is isostatically pressed to densify the initial shell coating 104 on the plurality of core particles 102 and, referring to FIG. 1C, thereby form the pressed powder 120, which has a densified shell coating 122. In at least some embodiments, isostatic pressing of the initial powder 100 in the pressing medium 110 is performed at a pressing temperature that ranges from 20°C to 200°C. The isostatic pressing process therefore may be referred to as a cold isostatic pressing process or a CIP process, i.e., isostatic pressing at temperatures below temperatures typically used in hot isostatic pressing. The lower temperatures of the CIP process reduce the risk of CTE mismatch induced stress, as well as lower the risk of shell/coating delamination or peeling.

The isostatic pressing of the initial powder 100 in the pressing medium 110 may be performed in a vessel, container, or chamber at pressures ranging from about 1000 psi to about 50,000 psi. The pressing pressure may be selected to ensure sufficient bonding between the initial shell particles 106 and the plurality of core particles 102 without a detrimental impact to any of the particles of the initial powder 100.

As further shown in FIG. 1C, after densification of the initial shell coating 104 to form the pressed powder 120, the pressing medium 110 is removed from the pressed powder 120. In some embodiments, removing the pressing medium 110 includes heating the pressing medium 110 containing the pressed powder 120 to an evaporation temperature at an evaporation pressure such that the pressing medium 110 evaporates from the pressed powder 120 and the pressed powder 120 is substantially free from the pressing medium 110. For example, where the pressing medium 110 is petroleum jelly, the pressing medium 110 containing the pressed powder 120 may be heated to an evaporation temperature of about 350°C to evaporate the petroleum jelly pressing medium 110 and leave the pressed powder 120. Heating the mixture of pressing medium 110 and pressed powder 120 to remove the pressing medium 110 may, in some embodiments, be performed in a vacuum (i.e., at an evaporation pressure below atmospheric pressure), e.g., to lower the evaporation temperature required to evaporate the pressing medium 110 or to otherwise assist in the removal of the pressing medium 110 to leave behind only the pressed powder 120.

In other embodiments, removing the pressing medium 110 includes dissolving the pressing medium 110 with a solvent to remove the pressing medium 110 from the pressed powder 120. For example, a solvent may be added to the mixture of the pressing medium 110 and the pressed powder 120 to dissolve the pressing medium 110; then, the dissolved pressing medium 110 may be drained or otherwise removed with any remaining solvent to leave behind the pressed powder 120. The solvent may be a liquid solvent or a gaseous solvent, such as a fluorine gas or other suitable solvent.

The initial shell coating 104 of the initial powder 100 has an initial average density, and the densified shell coating 122 of the pressed powder 120 has a pressed average density that is greater than the initial average density. Moreover, the initial shell coating 104 of the initial powder 100 has an initial chemical composition, and the densified shell coating 122 of the pressed powder 120 has a pressed chemical composition. The pressed chemical composition of the densified shell coating 122 can be the same as the initial chemical composition of the initial shell coating 104. For example, in some embodiments, the initial shell coating 104 may be a soft ferrite, such as a manganese zinc (MnZn) ferrite material, and the densified shell coating 122 is likewise the same ferrite material as the initial shell coating 104 (MnZn ferrite in the given example). However, in some embodiments, the pressed chemical composition of the densified shell coating 122 can be different from the initial chemical composition of the initial shell coating 104, such as when the pressing medium is not chemically inert with respect to the initial powder 100.

Further, referring back to FIG. 1A, the initial shell coating 104 of the initial powder 100 has an initial average thickness *tᵢ*. As shown in FIG. 1C, the densified shell coating 122 of the pressed powder 120 has a pressed average thickness *tₚ.* The pressed average thickness *tₚ* is less than the initial average thickness *tᵢ*. In some embodiments, the pressed average thickness *tₚ* is about 90% of the initial average thickness *tᵢ,* about 80% of the initial average thickness *tᵢ,* about 75% of the initial average thickness *tᵢ,* about 70% of the initial average thickness *tᵢ,* or a smaller percentage of the initial average thickness *tᵢ*. In one example, the pressed average thickness *tₚ* of the densified shell coating 122 on the core particles 102 is about 85% of the initial average thickness *tᵢ* of the initial shell coating 104 on the core particles 102.

Still referring to FIG. 1A, the dimensions and morphology of the plurality of core particles 102 remains the same throughout processing. For example, the plurality of core particles 102 of the initial powder 100 has an initial average diameter *dᵢ* that is the same as a pressed average diameter *dₚ* of the plurality of core particles 102 of the pressed powder 120. That is, the average diameter of the core particles 102 is the same despite processing of the core particles 102 to densify the initial shell coating 104 to form the densified shell coating 122. Further, the plurality of core particles 102 of the initial powder 100 has a morphology that is the same as a morphology of the plurality of core particles 102 of the pressed powder 120. For instance, as shown in the depicted embodiments, the plurality of core particles 102 in both the initial powder 100 and the pressed powder 120 are spherical.

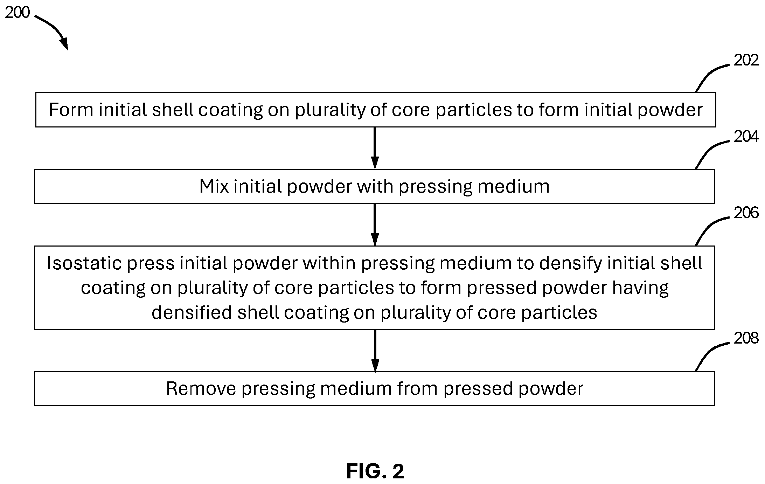

Referring now to FIG. 2, a flow diagram of one embodiment of a method 200 of forming a coating on particles is illustrated in accordance with embodiments of the present subject matter. In general, the method 200 will be described herein with reference to the initial powder 100, the pressing medium 110 having the initial powder 100 mixed therein, and the pressed powder 120 described above with reference to FIGS. 1A through 1C. However, it will be appreciated by those of ordinary skill in the art that the disclosed method 200 may generally be utilized to coat any suitable particles. In addition, although FIG. 2 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 2, the method 200 may include at (202) forming an initial shell coating on a plurality of core particles to form an initial powder. For example, as described above with respect to FIG. 1A, in some embodiments a plurality of initial shell particles 106 is mixed with a plurality of core particles 102 to form an initial shell coating 104 on the plurality of core particles 102. The plurality of core particles 102 may be, e.g., an iron powder and the plurality of initial shell particles 106 may be a smaller ferrite powder, and upon mixing the iron powder and the smaller ferrite powder, a thin or loosely adhered, non-dense ferrite coating is formed on the iron powder. In other embodiments, forming the initial shell coating includes forming a slurry composition including a plurality of initial shell particles 106, which is applied onto a plurality of core particles 102 to form the initial shell coating 104 on the plurality of core particles 102.

Continuing with FIG. 2, the method 200 may include at (204) mixing the initial powder with a pressing medium. For instance, as shown in FIG. 1B, the initial powder 100, having the plurality of core particles 102 with the initial shell coating 104 thereon, is mixed with a pressing medium 110. The pressing medium may be chemically inert with respect to the plurality of core particles and the initial shell coating, or in other embodiments may not be chemically inert with respect to the core and shell particles as described above, and the pressing medium may be substantially free from water. In at least some embodiments, the pressing medium includes an organic polymeric material, with example pressing media listed above.

Further, the method 200 may include at (206) isostatic pressing the initial powder within the pressing medium to densify the initial shell coating on the plurality of core particles to form a pressed powder, with the pressed powder including a densified shell coating on the plurality of core particles. As described above, the isostatic pressing process may be cold isostatic pressing and may be performed at a pressing temperature within a range of 20°C to 200°C. A pressed powder 120 having a densified shell coating 122 thereon is described with respect to FIG. 1C.

After isostatic pressing the pressing medium having the initial powder therein, the method 200 may include at (208) removing the pressing medium from the pressed powder. In some embodiments, removing the pressing medium includes heating the pressing medium containing the pressed powder to an evaporation temperature at an evaporation pressure such that the pressing medium evaporates from the pressed powder. In other embodiments, removing the pressing medium includes dissolving the pressing medium with a solvent to remove the pressing medium from the pressed powder.

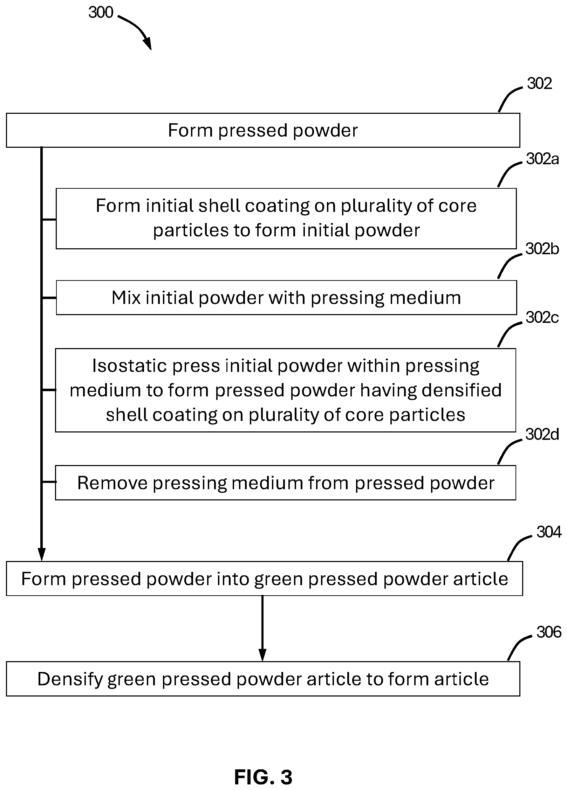

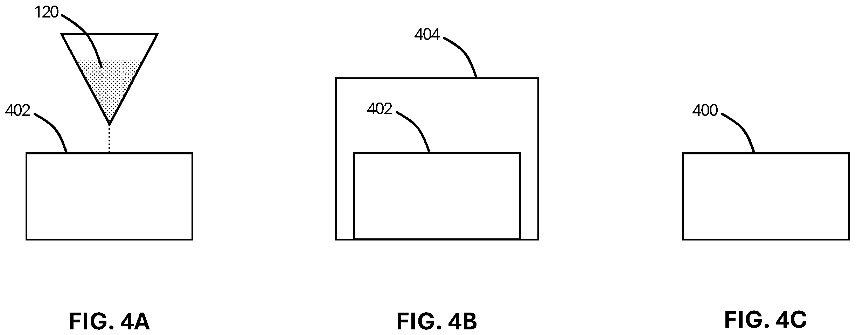

Referring now to FIG. 3, a flow diagram of one embodiment of a method 300 of forming an article from pressed powder is illustrated in accordance with embodiments of the present subject matter. In general, the method 300 will be described herein with reference to the formation of the pressed powder 120 described above with reference to FIGS. 1A through 1C and the formation of an article 400 therefrom shown in FIGS. 4A through 4C. However, it will be appreciated by those of ordinary skill in the art that the disclosed method 300 may generally be utilized to form any suitable article. In addition, although FIG. 3 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As illustrated in FIG. 3, the method 300 includes at (302) forming a pressed powder. The pressed powder may be formed in a manner substantially similar to the method 200 of forming a coating on particles, which is described with respect to the initial powder 100, pressing medium 110, and pressed powder 120 shown in FIGS. 1A, 1B, and 1C. For example, in the method 300, forming the pressed powder includes at (302a) coating a plurality of core particles with an initial shell coating to form an initial powder, at (302b) mixing the initial powder with a pressing medium, at (302c) isostatic pressing the initial powder within the pressing medium to densify the initial shell coating on the plurality of core particles to form a pressed powder, wherein the pressed powder includes a densified shell coating on the plurality of core particles, and at (302d), thereafter, removing the pressing medium from the pressed powder.

As described above, in the embodiment of FIGS. 1A-1C, the initial shell coating 104 of the initial powder 100 has an initial average density, an initial average thickness *tᵢ,* and an initial chemical composition, and the densified shell coating 122 of the pressed powder 120 has a pressed average density that is greater than the initial average density, the densified shell coating 122 of the pressed powder 120 has a pressed average thickness *tₚ* that is less than the initial average thickness *tᵢ,* and, at least in embodiments in which the pressing medium 110 is chemically inert with respect to the initial powder 100, the densified shell coating 122 of the pressed powder 120 has a pressed chemical composition that is the same as the initial chemical composition. As described herein, in embodiments in which the pressing medium 110 is not chemically inert with respect to the initial powder 100, the densified shell coating 122 can have a pressed chemical composition that is different than the initial chemical composition. Further, as previously described, isostatic pressing as shown at (302c) can be performed at a pressing temperature and a pressing pressure that avoids evaporation of the pressing medium during the isostatic pressing, with evaporation occurring at (302d) to remove the pressing medium from the pressed powder. That is, at (302d), the pressing medium with the pressed powder therein can be heated to an evaporation temperature at an evaporation pressure to substantially remove the pressing medium and leave behind the pressed powder. For example, the pressed powder can be substantially free from the pressing medium.

As shown at (304) in FIG. 3, the method 300 also includes forming the pressed powder into a green pressed powder article. For instance, in the embodiment illustrated in FIG. 4A, a pressed powder 120 formed as described in FIGS. 1A, 1B, and 1C is used to form a green pressed powder article 402. That is, the pressed powder 120 having a plurality of core particles 102 coated with a densified shell coating 122 can be formed into the green pressed powder article 402. Any suitable forming process, such as an additive manufacturing process (e.g., including, but not limited to, powder bed fusion (PBF) in any of its various forms, vat polymerization (VPP), fused deposition modeling (FDM), direct energy deposition (DED), laser engineered net shaping (LENS), laser net shape manufacturing (LNSM), direct metal deposition (DMD), digital light processing (DLP), binder jet printing (BJP), or ink jet deposition), a ply layup process, a powder compaction process, an electron-beam process, etc., may be used to form the pressed powder 120 into the green pressed powder article 402.

Referring to FIG. 3, the method 300 further includes at (306) densifying the green pressed powder article to form the article. As shown in FIG. 4B, the green pressed powder article 402 may be disposed in a chamber 404 to densify the green pressed powder article 402, e.g., to fill or otherwise reduce any voids or lower density areas in the material of the green pressed powder article 402. Densification may involve an isostatic pressing process (e.g., cold or hot isostatic pressing), a melt infiltration (MI) process, a chemical vapor infiltration (CVI) process, pressure-less sintering, or any suitable process or technique for densifying the green pressed powder article, such as another infiltration process. It will be appreciated that, in some embodiments, densifying the green pressed powder article may include firing or burning out of the green pressed powder article, e.g., to remove any solvents, impurities, residual pressing medium, or the like, followed by a densification process as previously described. As shown in FIG. 4C, the densified green pressed powder article is the pressed powder article 400.

In at least some embodiments, the pressed powder article is an iron-ferrite soft magnetic composite (SMC) component. Compared to prior iron-ferrite SMCs, an iron-ferrite SMC prepared according to method 300 has improved electrical resistivity. For example, an iron-ferrite SMC according to the present disclosure has an improvement in electrical resistivity of at least two times (2X), in some embodiments at least three times (3X), in some embodiments at least four times (4X), in some embodiments at least five times (5X), and in some embodiments at least six times (6X) or more compared to iron-ferrite SMCs formed using prior techniques. Such improvement in electrical resistivity also can be achieved without a debit on magnetic properties of the SMC. For example, the isostatic pressing does not introduce plastic strain to the soft magnetic core powder particles, thus does not harm its coercivity. As such, SMCs formed from pressed powder (or a densified coating powder) as described herein may be attractive for high power density axial flux and transverse flux electric machines, with significantly reduced eddy current losses at high frequencies. The methods described herein also may be useful for lightweighting inductors in power electronics and transformer cores that operate at high frequencies. Moreover, the densified shell coating described herein may have additional benefits, such as oxidation protection for an iron powder underneath the shell during thermal exposure in an oxidizing environment, increasing surface roughness to facilitate powder locking during uniaxial pressing, changing powder flowability to facilitate additive manufacturing, changing surface corrosion, and/or erosion properties of the pressed powder article.

Further aspects are provided by the subject matter of the following clauses:
A method of forming a coating on particles, the method comprising mixing an initial powder with a pressing medium, wherein the initial powder comprises a plurality of core particles having an initial shell coating thereon; isostatic pressing the initial powder within the pressing medium to densify the initial shell coating on the plurality of core particles to form a pressed powder, wherein the pressed powder comprises a densified shell coating on the plurality of core particles; and thereafter, removing the pressing medium from the pressed powder.

The method of any preceding clause, further comprising forming the initial shell coating on the plurality of core particles to form the initial powder.

The method of any preceding clause, wherein the initial shell coating comprises a plurality of initial shell particles, and wherein an average diameter of the plurality of core particles is at least two times (2X) larger than an average diameter of the plurality of initial shell particles.

The method of any preceding clause, wherein the plurality of initial shell particles is mixed with the plurality of core particles to form the initial shell coating on the plurality of core particles.

The method of any preceding clause, wherein the initial shell coating is formed from a shell slurry composition applied onto the plurality of core particles.

The method of any preceding clause, wherein the pressing medium is chemically inert with respect to the plurality of core particles and the initial shell coating.

The method of any preceding clause, wherein the pressing medium is substantially free from water.

The method of any preceding clause, wherein the pressing medium comprises an organic polymeric material.

The method of any preceding clause, wherein the initial shell coating of the initial powder has an initial average density, and wherein the densified shell coating of the pressed powder has a pressed average density that is greater than the initial average density.

The method of any preceding clause, wherein the initial shell coating of the initial powder has an initial chemical composition, and wherein the densified shell coating of the pressed powder has a pressed chemical composition that is the same as the initial chemical composition.

The method of any preceding clause, wherein isostatic pressing is performed at a pressing temperature that ranges from 20°C to 200°C.

The method of any preceding clause, wherein removing the pressing medium comprises heating the pressing medium containing the pressed powder to an evaporation temperature at an evaporation pressure such that the pressing medium evaporates from the pressed powder.

The method of any preceding clause, wherein removing the pressing medium comprises dissolving the pressing medium with a solvent to remove the pressing medium from the pressed powder.

The method of any preceding clause, wherein the plurality of core particles of the initial powder has an initial average diameter that is the same as a pressed average diameter of the plurality of core particles of the pressed powder.

The method of any preceding clause, wherein a morphology of the plurality of core particles of the initial powder is the same as a morphology of the plurality of core particles of the pressed powder.

The method of any preceding clause, wherein the plurality of core particles of the initial powder comprises a magnetic material.

A method of forming an article from a pressed powder, the method comprising forming a pressed powder, wherein forming the pressed powder comprises coating a plurality of core particles with an initial shell coating to form an initial powder, mixing the initial powder with a pressing medium, isostatic pressing the initial powder within the pressing medium to densify the initial shell coating on the plurality of core particles to form a pressed powder, wherein the pressed powder comprises a densified shell coating on the plurality of core particles, and thereafter, removing the pressing medium from the pressed powder; forming the pressed powder into a green pressed powder article; and densifying the green pressed powder article to form the article.

The method of any preceding clause, wherein the initial shell coating of the initial powder has an initial average density and an initial chemical composition, wherein the densified shell coating of the pressed powder has a pressed average density that is greater than the initial average density, and wherein the densified shell coating of the pressed powder has a pressed chemical composition that is the same as the initial chemical composition.

The method of any preceding clause, wherein isostatic pressing is performed at a pressing temperature and a pressing pressure that avoids evaporation of the pressing medium during the isostatic pressing.

The method of any preceding clause, wherein the article is an iron-ferrite soft magnetic composite (SMC) component.

The method of any preceding clause, wherein the initial shell coating (104) comprises a plurality of initial shell particles (106) having an average size that is at least two times (2X) smaller than an average size of the plurality of core particles (102)

This written description uses examples to disclose the present disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A method (200) of forming a coating on particles, the method comprising:
mixing (204) an initial powder (100) with a pressing medium (110), wherein the initial powder comprises a plurality of core particles (102) having an initial shell coating (104) thereon;
isostatic pressing (206) the initial powder within the pressing medium to densify the initial shell coating on the plurality of core particles to form a pressed powder (120), wherein the pressed powder comprises a densified shell coating (122) on the plurality of core particles; and
thereafter, removing (208) the pressing medium from the pressed powder.

2. The method of claim 1, further comprising:
forming (202) the initial shell coating (104) on the plurality of core particles (102) to form the initial powder (100).

3. The method of claim 2, wherein the initial shell coating (104) comprises a plurality of initial shell particles (106) having an average size that is at least two times (2X) smaller than an average size of the plurality of core particles (102).

4. The method of claim 3, wherein the plurality of initial shell particles (106) is mixed with the plurality of core particles (102) to form the initial shell coating (104) on the plurality of core particles.

5. The method of any one of claim 2 or 3, wherein the initial shell coating (104) is formed from a shell slurry composition applied onto the plurality of core particles (102).

6. The method of any preceding claim, wherein the pressing medium (110) is chemically inert with respect to the plurality of core particles (102) and the initial shell coating (104).

7. The method of any preceding claim, wherein the pressing medium (110) is substantially free from water.

8. The method of any preceding claim, wherein the pressing medium (110) comprises an organic polymeric material.

9. The method of any preceding claim, wherein the initial shell coating (104) of the initial powder (100) has an initial average density, and wherein the densified shell coating (122) of the pressed powder (120) has a pressed average density that is greater than the initial average density.

10. The method of any preceding claim, wherein the initial shell coating (104) of the initial powder (100) has an initial chemical composition, and wherein the densified shell coating (122) of the pressed powder (120) has a pressed chemical composition that is substantially the same as the initial chemical composition.

11. The method of any preceding claim, wherein isostatic pressing (206) is performed at a pressing temperature that ranges from 20°C to 200°C.

12. The method of any preceding claim, wherein removing (208) the pressing medium (110) comprises heating the pressing medium containing the pressed powder (120) to an evaporation temperature at an evaporation pressure such that the pressing medium evaporates from the pressed powder.

13. The method of any of claims 1 to 11, wherein removing (208) the pressing medium (110) comprises dissolving the pressing medium with a solvent to remove the pressing medium from the pressed powder (120).

14. The method of any preceding claim, wherein the plurality of core particles (102) of the initial powder (100) has an initial average diameter that is substantially the same as a pressed average diameter of the plurality of core particles (102) of the pressed powder (120).

15. The method of any preceding claim, wherein a morphology of the plurality of core particles (102) of the initial powder (100) is substantially the same as a morphology of the plurality of core particles (102) of the pressed powder (120).
